(19)

**Europäisches Patentamt**
**European Patent Office**
**Office européen des brevets**

(11) **EP 4 479 779 B1**

(12) **EUROPEAN PATENT SPECIFICATION**

(45) Date of publication and mention
of the grant of the patent:
**24.12.2025 Bulletin 2025/52**

(21) Application number: **23706845.7**

(22) Date of filing: **26.01.2023**

(51) International Patent Classification (IPC):
***G01T 1/24*** *(2006.01)*

(52) Cooperative Patent Classification (CPC):
**G01T 1/247; G01T 1/241**

(86) International application number:
**PCT/IB2023/050681**

(87) International publication number:
**WO 2023/156860 (24.08.2023 Gazette 2023/34)**

(54) **SILICON SENSORS WITH RESISTIVE READING WITHOUT IMAGE DISTORTION**

SILIZIUMSENSOREN MIT WIDERSTANDSLESEN OHNE BILDVERZERRUNG

CAPTEURS EN SILICIUM À LECTURE RÉSISTIVE SANS DISTORSION D'IMAGE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **17.02.2022 IT 202200002993**

(43) Date of publication of application:
**25.12.2024 Bulletin 2024/52**

(73) Proprietor: **INFN - Istituto Nazionale di Fisica
Nucleare
00044 Frascati (RM) (IT)**

(72) Inventors:
• **CARTIGLIA, Nicolò
00044 Frascati (RM) (IT)**
• **MENZIO, Luca
00044 Frascati (RM) (IT)**

(74) Representative: **Metroconsult Srl
Foro Bonaparte 51
20121 Milano (IT)**

(56) References cited:
**US-A1- 2011 155 918**

• **MANDURRINO M ET AL: "Analysis and numerical design of Resistive AC-Coupled Silicon Detectors (RSD) for 4D particle tracking", NUCLEAR INSTRUMENTS & METHODS IN PHYSICS RESEARCH. SECTION A, ELSEVIER BV * NORTH-HOLLAND, NL, vol. 959, 22 January 2020 (2020-01-22), XP086063291, ISSN: 0168-9002, [retrieved on 20200122], DOI: 10.1016/ J.NIMA.2020.163479**
• **TORNAGO M ET AL: "Resistive AC-Coupled Silicon Detectors: Principles of operation and first results from a combined analysis of beam test and laser data", NUCLEAR INSTRUMENTS & METHODS IN PHYSICS RESEARCH. SECTION A, ELSEVIER BV * NORTH-HOLLAND, NL, vol. 1003, 20 April 2021 (2021-04-20), XP086563693, ISSN: 0168-9002, [retrieved on 20210420], DOI: 10.1016/ J.NIMA.2021.165319**
• **JEON SU-JIN ET AL: "Position Error Correction Using Homography in Discretized Positioning Circuit for Gamma-Ray Imaging Detection System", IEEE TRANSACTIONS ON NUCLEAR SCIENCE, IEEE, USA, vol. 64, no. 2, 1 February 2017 (2017-02-01), pages 816 - 819, XP011642878, ISSN: 0018-9499, [retrieved on 20170317], DOI: 10.1109/TNS.2016.2639532**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

<u>Technical field of the invention</u>

The invention relates to semiconductor devices with a position-sensitive resistive reading system, for the detection of ionizing radiation, with low resistance connections between the reading electrodes to limit distortion in determining the impact position of the radiation.

<u>Known art</u>

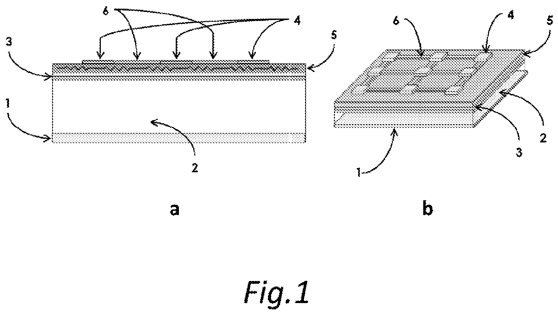

The present invention generally refers to devices for detecting radiation based on the principle of resistive reading coupled in direct current (DC), Figure 1. The detectors in question are characterized by a resistive surface (5) directly coupled to electrodes (4) of reading.

Devices of this type operate substantially by producing an electrical signal as ionizing radiation passes through them. In particular, during normal operation, this signal is generated by the creation by ionization of free charges, electrons and holes, which under the influence of an external electric field generate an electric current. The signal is detected by a plurality of reading electrodes wherein the amplitude of the signal detected by each electrode is determined both by the electrical resistance between the point of impact of the radiation and the electrode itself and by those between the point of impact and nearby electrodes. It is possible to reconstruct the impact position of the radiation through various algorithms, such as for example the one that uses charge asymmetry.

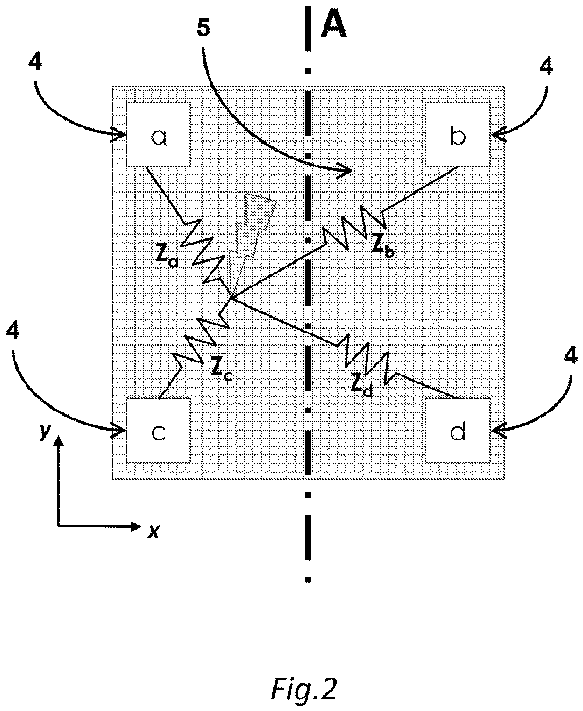

Considering a design with four reading electrodes and an axis of symmetry A of the device, as in Figure 2, the impact position of the radiation with respect to this axis can be calculated as:

$$x = \frac{(Q_b + Q_d) - (Q_a + Q_c)}{Q_a + Q_b + Q_c + Q_d}$$

<div align="right"><em>Equation 1</em></div>

Where Qi represents the amount of charge collected by the *i-th* electrode.

When x is zero, the point of impact is on the axis of symmetry, for positive x it is shifted towards reading electrodes *b* and *d*, while for negative x it is shifted towards reading electrodes *a* and *c*. The value of *x* is proportional to the amount of displacement with respect from the axis of symmetry.

Similarly, the position along the *y-axis* is calculated as:

$$y = \frac{(Q_a + Q_b) - (Q_c + Q_d)}{Q_a + Q_b + Q_c + Q_d}$$

<div align="right"><em>Equation 2</em></div>

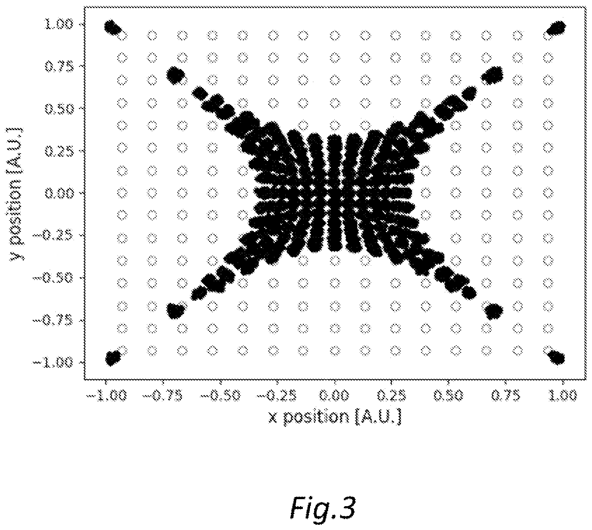

A problem found in the use of these devices is that the reconstruction of the position carried out in this way suffers from distortions, as in Figure 3, where the points where the signal was injected (empty circles) and the reconstructed points (dots full). In the case in the figure, the reconstructed points gather towards the center of the figure, creating a systematic error in the reconstruction of the point of impact. These distortions can be corrected through geometric techniques borrowed from optics called homographies [Jeon, Su-Jin & Kim, JiHoon & Ji, Myung Gi & Park, Jun-Hee & Choi, Young-Wan. (2016). Position Error Correction Using Homography in Discretized Positioning Circuit for Gamma-Ray Imaging Detection System. IEEE Transactions on Nuclear Science. PP. 1-1. 10.1109/TNS.2016.2639532]. The scientific article of Mandurrino M. et al., "Analysis and numerical design of Resistive AC-Coupled Silicon Detectors (RSD) for 4D particle tracking", Nuclear Inst. and Methods in Physics Research, A 959 (2020) 163479, discloses the numerical simulation of silicon detectors with internal gain as the main tool for 4-dimensional (4D) particle trackers design and optimization. The Low-Gain Avalanche Diode (LGAD) technology and its present limitations are reviewed.

<u>Summary of the Invention</u>

As defined in independent claim 1, the invention consists of a semiconductor device for the detection of ionizing radiation sensitive to the impact position, based on the design of the resistive reading, wherein the reading electrodes are connected to each other by strings with low electrical resistance. These strings have the purpose of distributing the charge that the electrodes receive following the impact of the radiation on the device in order to reduce distortions in the reconstruction of the position. The low-resistance strings connecting the reading electrodes have electrical resistance per unit of length that varies along their length L. This resistance variation along the string manages to induce a division of charge between the electrodes such that the reconstruction of the point of impact is much more accurate than the case without strings or with fixed resistance strings.

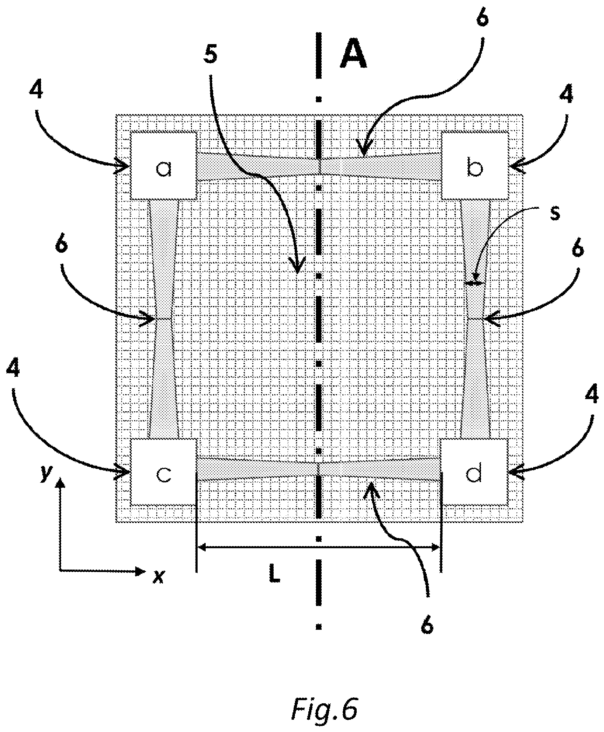

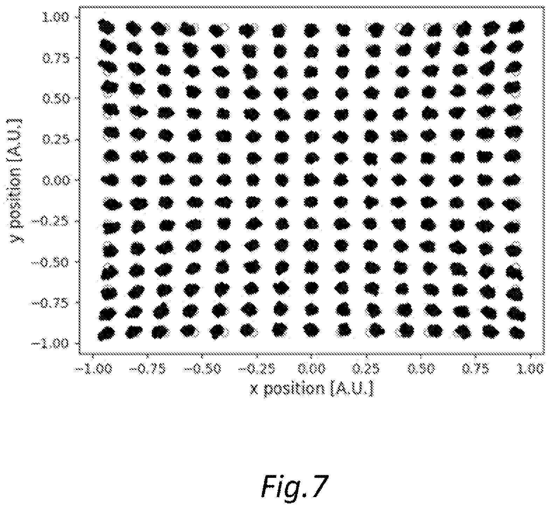

An example of this design is shown in Figure 6: the electrical resistance per unit length of the strings connecting the reading electrodes is maximum (the maximum resistance corresponds to the minimum transverse dimension of the string) at the midpoint between the two electrodes and decreases as you approach them. With a design of this type it is possible to distribute the charge between the reading electrodes so that the distortion on the position is reduced to negligible levels, Figure 7. The reconstructed points, full dots, are superimposed on the empty circles which indicate the position in which the signal has been injected.

Brief disclosure of the drawings

Figure 1 shows the cross section 1a and isometric view 1b of a DC coupled resistive readout type semiconductor device.

Figure 2 shows the resistive paths between the point of impact of the radiation and the reading electrodes.

Figure 3 shows the bias in the impact location reconstruction for devices without the low resistance strings. The empty circles represent the points of impact of the radiation, the filled dots the reconstruction of the points of impact obtained with equation 1.

Figure 4 shows a device with low resistance strings connecting the reading electrodes.

Figure 5 shows the bias in the position reconstruction for a device with low resistance strings. The empty circles represent the points of impact of the radiation, the filled dots the reconstruction of the points of impact obtained with equation 1.

Figure 6 shows a preferred embodiment of the device according to the present invention.

Figure 7 shows the reconstruction of the radiation impact location obtained using the first preferred embodiment of the present invention. The empty circles represent the points of impact of the radiation, the filled dots the reconstruction of the points of impact.

Figure 8 shows preferred embodiments of the invention wherein the reading cells take different shapes. 8a) square cell, 8b) rectangular cell, 8c) triangular/hexagonal cell, 8d) aperiodic cell.

Detailed description of the invention

With reference to Figures 1, 2, 4, 6, 8, the numbers indicate: 1: electrode located on the second face of the device, made of doped semiconductor material; 2: substrate of semiconductor material with doping of the same type as electrode 2; layer with doping of the same type as 2, but with a higher concentration, used to increase the value of the electric field generated; 4: reading electrodes; 5: layer with doping of a different type than 2, which acts as a resistive surface; 6: low resistance strings that connect the reading electrodes to each other.

For the purposes of the present invention "reading electrode" means that portion of the detector, usually metallic, suitable for reading the signal generated by the interaction of the radiation or the particle with the detector or detection device. By "event" we mean the interaction of the ionizing radiation with the detection device. By "resistive surface" we mean the surface of the detector active in the detection of events. By "low resistance strings" we mean the connections between the electrodes which have an electrical resistance significantly lower or less than 20% compared to that of the resistive surface. Said connections are made by locally increasing the doping level of the layer in the region that connects two reading electrodes, so as to increase its electrical conductivity, or by using a layer of material with suitable electrical resistance consisting, by way of example but not of limitation, of a layer of metal or suitably doped polycrystalline silicon (polysilicon). By "reading cell" we mean an elementary unit defined by the position of 3 or more reading electrodes which is repeated on the surface of the device until the area is completely tessellated.

As known to the person skilled in the art, the reconstruction of the impact position of the radiation on the device is affected by distortions which limit its accuracy.

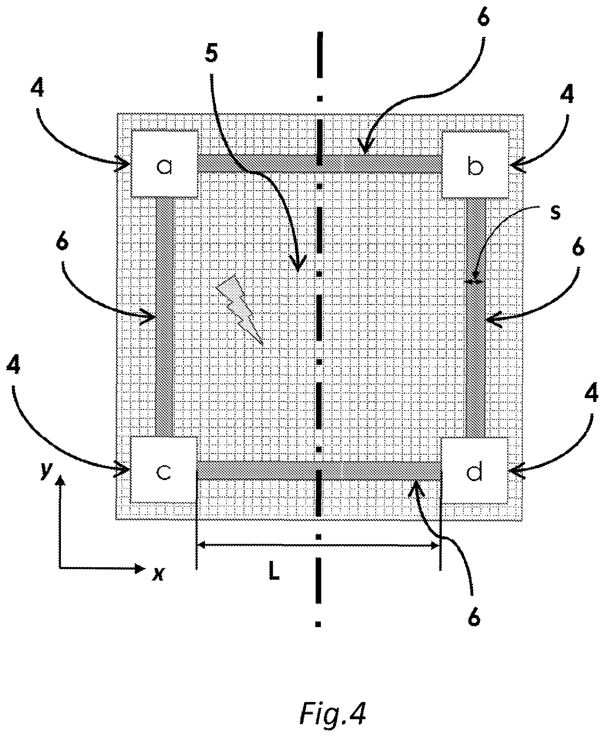

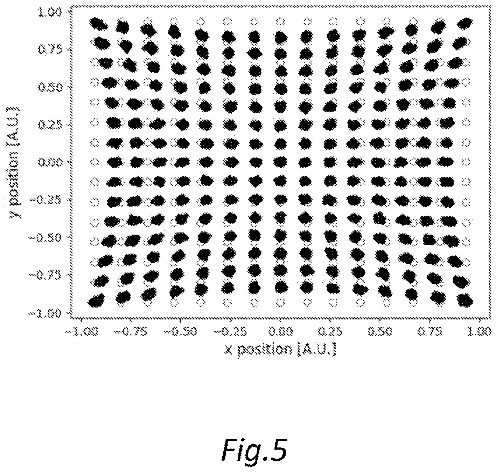

These distortions can be reduced by adding low resistance strings to the device which connect the reading electrodes in pairs, Figure 4. By suitably choosing the resistance of the strings it is possible to partially compensate the distortion, obtaining a more accurate position reconstruction, Figure 5. In this figure the signals are injected at the empty circles, while the reconstructed points are indicated with filled dots.

The present invention focuses on the optimal characteristics of said strings, varying their doping level and/or their geometric characteristics as a function of their length L, so as to modulate their electrical resistance. In this way it is possible to further improve the compensation of the distortion in the position of the events, making it negligible at best.

Semiconductor devices for detecting ionizing radiation are generally constructed by using a substrate of semiconductor material typically characterized by a p-type or n-type doping on which a thin doping layer of a type different from the first (n-type or type p).

For the sole purpose of exemplifying and not limiting the device shown in Figure 1 is described. This device consists of a substrate 2 of semiconductor material characterized by a p-type doping (for example p-silicon) and a layer 5 of semiconductor material with doping of n-type (for example n-silicon) placed on a first face of said substrate 2 to form a first electrode. At a second surface of the substrate 2, opposite the first surface, a second electrode 1 is provided. The first electrode 5 in the type of resistive detectors is typically continuous. Above the electrode 5 and in direct contact with it, metal electrodes 4 are placed.

In technical jargon, these metal electrodes are called reading electrodes. The reading electrodes are generally formed by a layer of metal 4, for example aluminum, having the function of ensuring a good electrical contact between the reading electrode and the electronics required for reading the generated electrical signal. A further layer 6, constituted by way of non-limiting example of polycrystalline silicon (polysilicon) doped with the same dopant as the substrate 5, but with a higher doping level, i.e. with higher dopant concentrations, acts as a low-resistance string for the connection between the reading electrodes. The electrical resistance of said strings is determined by two parameters: the doping level and/or the cross section with respect to the direction of propagation of the charge signal from the point of impact towards the electrode 4. According to a preferred embodiment of the present invention the resistance of the strings is not constant along their length but varies as the strings are made by varying one or both of the aforementioned parameters, so as to minimize to negligible levels the distortion of the position reconstruction due to a non-optimal distribution of the generated charge.

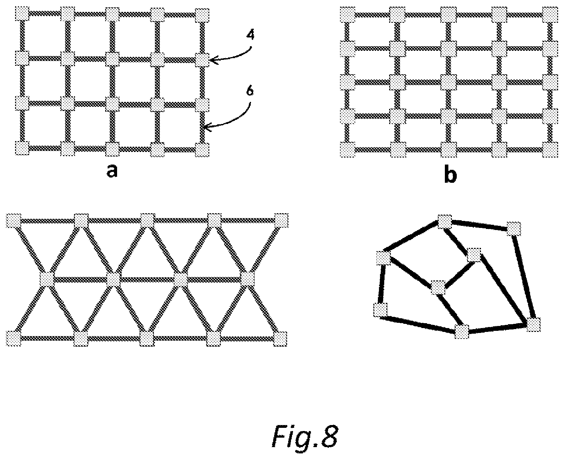

In a preferred embodiment of the invention, the reading cell is formed by four reading electrodes arranged to form a square, Figure 8a, or a rectangle, Figure 8b and connected to each other in pairs by low resistance strings. The section of the strings increases from a minimum value at the point equidistant from each of the reading electrodes 4 which it joins to maximum values, equal to approximately double the minimum, at said reading electrodes 4.

However, the embodiment wherein the section of the strings decreases from a maximum value at the point equidistant from each of the reading electrodes 4 which joins to minimum values in correspondence with said reading electrodes 4, falls within the scope of the present invention.

In a second preferred embodiment, the low-resistance strings consist of a polysilicon layer whose doping level increases along the length of the strings, from a minimum value located at the maximum distance from each of the electrodes to a maximum at of the reading electrodes.

In a third preferred embodiment, the low resistance strings consist of a metal layer whose cross section varies along their length.

In a fourth preferred embodiment, the low-resistance strings are made by locally increasing the doping level of layer 5 in the area that connects two reading electrodes 4, through an implant of the same type of dopant present in layer 5 but in a higher concentration than the layer 5 itself.

In a fifth preferred embodiment, the reading cells are arranged according to a triangular or hexagonal lattice, Figure 8c.

In a further preferred embodiment, the reading strings join electrodes positioned in an irregular manner on the surface of the semiconductor, to form reading elementary cells of irregular shape, Figure 8d.

In all the embodiments described above, the electrical resistance per unit length of each low resistance string varies between the point equidistant from each of the reading electrodes 4 which it connects and said reading electrodes 4. In any preferred embodiment, the electrical resistance for unit length of low resistance strings can vary along the length L of the string itself with both linear and non-linear increments following, for example but not limited to, exponential, polynomial, or stepped functions.

In light of the description provided up to now, the semiconductor device for detecting ionizing radiation according to the present invention comprises the following main elements:

- a substrate 2 of semiconductor material characterized by a doping of the p or n type and having a first and a second main face opposite each other;

- a layer 5 of semiconductor material with doping of the n or p type, different from the doping type of the substrate 2, placed on the first face of said substrate 2 to form a first electrode;

- a possible layer 3 having the same type of doping as the substrate 2 but with a higher concentration, in order to increase the value of the electric field generated;

- a second electrode 1 at the second face of the substrate 2

- a multiplicity of metal electrodes 4 positioned above the semiconductor layer 5

- a multiplicity of low resistance strings 6 which connect the electrodes to each other and whose electrical resistance varies along the length of the strings themselves, increasing from a minimum value at the maximum distance from the reading electrodes up to a maximum in contact with the electrodes themselves.

Generally, the layer 5 of semiconductor material has an electrical surface resistance between 500 Ohm/square and 5000 Ohm/square, while the resistance per unit length of the low resistance strings 6 is between 0.1 Ohm/$\mu$m and 20 Ohm/$\mu$m.

In the embodiments described, the distance between the reading electrodes is between 50 and 2000 micrometres, this dimension coinciding with the length "L" of the strings. The dimensions of the reading electrodes are between 20 and 100 micrometers, while the width "s" of the low resistance strings is between 2 and 50 micrometers.

It is therefore evident to the person skilled in the art that for the production of semiconductor devices according to the present invention it is possible to resort to processes known in the state of the art such as the one described below by way of non-limiting example.

Starting from a doped semiconductor substrate 2, a doped silicon layer 5 opposite the substrate is implanted on one face of said substrate. A second electrode 1, this time with the same doping as the substrate, is arranged on a second surface of the substrate 2 opposite to said first surface. On the layer 5 are deposited, through lithographic techniques, reading electrodes 4 capable of collecting the electric charges created in the substrate 2. The low-resistance strings 6, which connect the electrodes 4, are also positioned in the electrode 5. These low-resistance strings resistance can be obtained with various construction techniques, which depend on the value of electrical resistance per unit of length sought.

In one embodiment, the low resistance strings are obtained by depositing between the electrodes 4 a layer of polycrystalline silicon, the shape of which is obtained through a specially designed mask. In a second embodiment, the low-resistance string is obtained through a silicon implant with the same doping as the electrode 5, which connects the electrodes 4. The shape of the implant, and therefore of the resulting string, is determined by a photolithographic mask. In a further embodiment, the resistance is obtained through a metal layer of suitable dimensions.

## Claims

1. Semiconductor device for the detection of ionizing radiation including:

   - a substrate (2) of semiconductor material **characterized by** a doping of the p or n type and having a first and a second main face opposite to each other;
   - a layer (5) of semiconductor material with doping of the n or p type, different from the doping type of the substrate (2), placed on the first face of said substrate (2) to form a first electrode;
   - a second electrode (1) at the second face of the substrate (2);
   - a plurality of metal electrodes (4), also known as reading electrodes (4), positioned above the semiconductor layer (5);
   - a multiplicity of low-resistance strings (6) which connect the reading electrodes (4) to each other two by two;

   wherein the low resistance strings (6) are **characterized by** an electrical resistance per unit length of each string of maximum or minimum value at the point equidistant from each of the reading electrodes (4) which joins and minimum or maximum values at said reading electrodes (4).

2. Semiconductor device according to the preceding claim, comprising a further semiconductor layer (3) having the same doping type as the substrate (2) and a higher dopant concentration than the substrate (2).

3. Semiconductor device according to one of the preceding claims, wherein the layer (5) of semiconductor material has an electrical surface resistance of between 500 Ohm/square and 5000 Ohm/square, while the resistance per unit length of the strings has a low resistance (6) is between 0.1 Ohm/$\mu$m and 20 Ohm/$\mu$m.

4. Semiconductor device according to one of the preceding claims, wherein the reading electrodes (4) connected to each other in pairs by low resistance strings are arranged on the surface of the device so as to form a periodic lattice whose unit cell is square or rectangular.

5. Semiconductor device according to one of the preceding claims, wherein the reading electrodes (4) connected to each other in pairs by low resistance strings are arranged on the surface of the device so as to form a periodic lattice whose elementary cell is triangular or hexagonal.

6. Semiconductor device according to one of the preceding claims, wherein the reading electrodes (4) connected to each other in pairs by low resistance strings are arranged on the surface of the device to form reading elementary cells of irregular shape.

7. Semiconductor device according to one of the preceding claims, wherein the cross section with respect to the direction of propagation of the electric signal of the low resistance strings varies as a function of the distance from the reading electrodes.

8. Semiconductor device according to the preceding claim wherein said strings are made of doped polysilicon or metallic material.

9. Semiconductor device according to one of claims from 1 to 7 wherein the low resistance strings are made by locally increasing the doping level of the layer (5) in the area which connects two reading electrodes (4).

10. Semiconductor device according to one of claims from 1 to 7 wherein the low resistance strings consist of a layer of doped polysilicon the doping level of which varies as a function of the distance from the reading electrodes.

11. Semiconductor device according to one of the preceding claims, wherein the electrical resistance of the low resistance strings varies as a function of the distance from the electrodes according to a linear, polynomial, exponential or step function.

**Patentansprüche**

1. Halbleitervorrichtung für den Nachweis ionisierender Strahlung, wobei die Anordnung enthält:

   - ein Substrat (2) aus Halbleitermaterial, das durch eine Dotierung vom p- oder n-Typ gekennzeichnet ist und eine erste und zweite Hauptseitenfläche aufweist, die einander entgegengesetzt sind;
   - eine Schicht (5) aus Halbleitermaterial mit einer Dotierung vom n- oder p-Typ, die sich von dem Dotierungstyp des Substrats (2) unterscheidet, die auf der ersten Seitenfläche des Substrats (2) platziert ist, um eine erste Elektrode zu bilden;
   - eine zweite Elektrode (1) auf der zweiten Seitenfläche des Substrats (2);
   - eine Vielzahl von Metallelektroden (4), die auch als Leseelektroden (4) bezeichnet werden, die über der Halbleiterschicht (5) positioniert sind;
   - eine Vielzahl von Strängen (6) mit niedrigem Widerstand, welche die Leseelektroden (4) jeweils zwei zu zwei miteinander verbinden;

   wobei die Stränge (6) mit niedrigem Widerstand durch einen elektrischen Widerstand je Längeneinheit eines jeden Strangs mit einem Maximal- oder Minimalwert an dem Punkt, der gleich weit von jeder der Leseelektroden (4) entfernt ist und diese verbindet, und einem Minimal- oder Maximalwert an den Leseelektroden (4) gekennzeichnet sind.

2. Halbleitervorrichtung nach dem vorhergehenden Anspruch, umfassend eine weitere Halbleiterschicht (3) mit demselben Dotierungstyp wie das Substrat (2) und einer höheren Dotierungskonzentration als das Substrat (2).

3. Halbleitervorrichtung nach einem der vorhergehenden Ansprüche, wobei die Schicht (5) aus Halbleitermaterial einen elektrischen Oberflächenwiderstand zwischen 500 Ohm/Quadrat und 5000 Ohm/Quadrat aufweist, während der Widerstand pro Längeneinheit der Stränge (6) mit niedrigem Widerstand zwischen 0,1 Ohm/$\mu$m und 20 Ohm/$\mu$m beträgt.

4. Halbleitervorrichtung nach einem der vorhergehenden Ansprüche, wobei die Leseelektroden (4), die paarweise durch Stränge mit niedrigem Widerstand miteinander verbunden sind, auf der Oberfläche der Vorrichtung so angeordnet sind, dass sie ein periodisches Gitter bilden, dessen Einheitszelle quadratisch oder rechteckig ist.

5. Halbleitervorrichtung nach einem der vorhergehenden Ansprüche, wobei die Leseelektroden (4), die paarweise durch Stränge mit niedrigem Widerstand miteinander verbunden sind, auf der Oberfläche der Vorrichtung so angeordnet sind, dass sie ein periodisches Gitter bilden, dessen elementare Zelle dreieckig oder sechseckig ist.

**6.** Halbleitervorrichtung nach einem der vorhergehenden Ansprüche, wobei die Leseelektroden (4), die paarweise durch Stränge mit niedrigem Widerstand miteinander verbunden sind, auf der Oberfläche der Vorrichtung so angeordnet sind, dass sie elementare Lesezellen mit unregelmäßiger Form bilden.

**7.** Halbleitervorrichtung nach einem der vorhergehenden Ansprüche, wobei der Querschnitt in Bezug auf die Ausbreitungsrichtung des elektrischen Signals der Stränge mit niedrigem Widerstand als eine Funktion des Abstands von den Leseelektroden variiert.

**8.** Halbleitervorrichtung nach dem vorhergehenden Anspruch, wobei die Stränge aus dotiertem Polysilizium oder Metallmaterial hergestellt sind.

**9.** Halbleitervorrichtung nach einem der Ansprüche von 1 bis 7, wobei die Stränge mit niedrigem Widerstand hergestellt werden, indem das Dotierungsniveau der Schicht (5) in der Fläche, welche zwei Leseelektroden (4) verbindet, lokal erhöht wird.

**10.** Halbleitervorrichtung nach einem der Ansprüche 1 bis 7, wobei die Stränge mit niedrigem Widerstand aus einer Schicht aus dotiertem Polysilizium bestehen, deren Dotierungsniveau als Funktion des Abstands zu den Leseelektroden variiert.

**11.** Halbleitervorrichtung nach einem der vorhergehenden Ansprüche, wobei der elektrische Widerstand der Stränge mit niedrigem Widerstand als Funktion des Abstands zu den Elektroden gemäß einer linearen, polynomialen, exponentiellen oder stufenförmigen Funktion variiert.

**Revendications**

**1.** Dispositif semi-conducteur pour la détection de rayonnements ionisants comprenant :

- un substrat (2) de matériau semi-conducteur **caractérisé par** un dopage de type p ou n et ayant une première et une seconde face principale opposées l'une à l'autre ;
- une couche (5) de matériau semi-conducteur avec dopage de type n ou p, différent du type de dopage du substrat (2), placée sur la première face dudit substrat (2) pour former une première électrode ;
- une seconde électrode (1) sur la seconde face du substrat (2) ;
- une pluralité d'électrodes métalliques (4) , également appelées électrodes de lecture (4), positionné au-dessus de la couche semi-conductrice (5) ;
- une multiplicité de cordes à faible résistance (6) qui relient les électrodes de lecture (4) l'une à l'autre deux par deux ;

dans lequel les cordes à faible résistance (6) sont **caractérisées par** une résistance électrique par unité de longueur de chaque corde de valeur maximale ou minimale au point équidistant de chacune des électrodes de lecture (4) qui se joint et des valeurs minimales ou maximales auxdites électrodes de lecture (4).

**2.** Dispositif semi-conducteur selon la revendication précédente, comprenant une autre couche semi-conductrice (3) ayant le même type de dopage que le substrat (2) et une concentration de dopant plus élevée que le substrat (2).

**3.** Dispositif semi-conducteur selon l'une des revendications précédentes, dans lequel la couche (5) de matériau semi-conducteur a une résistance de surface électrique comprise entre 500 Ohm/carré et 5000 Ohm/carré, tandis que la résistance par unité de longueur des cordes a une faible résistance (6) est entre 0,1 Ohm/$\mu$m et 20 Ohm/$\mu$m.

**4.** Dispositif à semi-conducteurs selon l'une des revendications précédentes, dans lequel les électrodes de lecture (4) reliées entre elles par paires par des cordes à faible résistance sont disposées sur la surface du dispositif de manière à former un réseau périodique dont la cellule unitaire est carrée ou rectangulaire.

**5.** Dispositif semi-conducteur selon l'une des revendications précédentes, dans lequel les électrodes de lecture (4) reliées entre elles par paires par des cordes à faible résistance sont disposées à la surface du dispositif de manière à former un réseau périodique dont la cellule élémentaire est triangulaire ou hexagonale.

**6.** Dispositif à semi-conducteur selon l'une des revendications précédentes, dans lequel les électrodes de lecture (4) reliées entre elles par paires par des cordes à faible résistance sont disposées sur la surface du dispositif pour former la lecture des cellules élémentaires de forme irrégulière.

7. Dispositif semi-conducteur selon l'une des revendications précédentes, dans lequel la section transversale par rapport à la direction de propagation du signal électrique des cordes à faible résistance varie en fonction de la distance depuis les électrodes de lecture.

8. Dispositif semi-conducteur selon la revendication précédente, dans lequel lesdites cordes sont constituées de polysilicium dopé ou d'un matériau métallique.

9. Dispositif semi-conducteur selon l'une des revendications 1 à 7, dans lequel les cordes à faible résistance sont fabriquées en augmentant localement le niveau de dopage de la couche (5) dans la zone qui relie deux électrodes de lecture (4).

10. Dispositif semi-conducteur selon l'une des revendications 1 à 7, dans lequel les cordes à faible résistance sont constituées d'une couche de polysilicium dopé dont le niveau de dopage varie en fonction de la distance depuis les électrodes de lecture.

11. Dispositif à semi-conducteur selon l'une des revendications précédentes, dans lequel la résistance électrique des cordes à faible résistance varie en fonction de la distance depuis les électrodes selon une fonction linéaire, polynomiale, exponentielle ou d'étape.

Fig.1

Fig.2

Fig.3

Fig.4

*Fig.5*

Fig.6

Fig.7

*Fig.8*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **JEON, SU-JIN** ; **KIM, JIHOON** ; **JI, MYUNG** ; **GI** ; **PARK** ; **JUN-HEE** ; **CHOI, YOUNG-WAN**. Position Error Correction Using Homography in Discretized Positioning Circuit for Gamma-Ray Imaging Detection System. *IEEE Transactions on Nuclear Science*, 2016, 1-1

- **MANDURRINO M. et al.** Analysis and numerical design of Resistive AC-Coupled Silicon Detectors (RSD) for 4D particle tracking. *Nuclear Inst. and Methods in Physics Research, A*, 2020, vol. 959, 163479